# EUROPEAN PATENT SPECIFICATION

(11) **EP 0 642 971 B1**
(45) Date of publication and mention of the grant of the patent: **21.01.1998**
(21) Application number: 94306690.2
(22) Date of filing: 13.09.1994
(51) Int. Cl.: B62J 11/00, F16B 7/04

(54) **Holder for elongate articles**
Halter für längliche Gegenstände
nispositif de retenue pour objets oblongs

(30) Priority: 14.09.1993 DE 9313904 U
(43) Date of publication of application: 15.03.1995
(73) Proprietor: EMHART INC., Newark, Delaware 19711 (US)
(72) Inventor: Baum, Heinz Otto, D-6300 Giessen-Allendorf (DE); Hahn, Ernst-Ludwig, D-6301 Rabenau (DE); Karch, Edwin, D-97720 Nüdlingen (DE); Steuer, Werner, D-97424 Schweinfurt (DE); Waschkuhn, Wolf, D-97421 Schweinfurt (DE)
(74) Representative: Randall, John Walter

(56) References cited:
- DE-U- 9 107 185
- FR-A- 2 652 130

## Description

The present invention relates to a holder for elongate articles, in particular for Bowden cables on a bicycle wherein the holder may be mounted on a partially rod-shaped part of the bicycle.

An arrangement for installing Bowden cables on a bicycle is known from the Gebrauchsmuster G 91 07 185.2, to which reference will be made in this application and in which T-studs are welded onto the frame by the known stud welding process and holders are pushed onto these T-studs. These holders are secured against radial and axial removal and have recesses which extend longitudinally at the sides and are designed such that Bowden cables of a specific diameter may be pressed into the recesses. The holders have a tab which is articulated longitudinally at the sides, is pivotal for holding the Bowden cables over the recesses and the anti-removal device and is held on the holder by means of a detachable locking device.

However, fastening by means of T-studs has various drawbacks in bicycles. For example, bicycle frames are increasingly produced from aluminium with which conventional welds cannot be produced. Furthermore, the position of the holder is determined by the T-stud during the process of welding on the T-stud and cannot therefore be altered by the user. The rigid T-stud does not allow positional alignment in a subsequent assembly process. The mounting of a T-stud is relatively time-consuming, demands complex machinery and is therefore correspondingly expensive.

An object of the invention is to provide a holder for elongate articles which guarantees secure holding of the articles, may be produced inexpensively and may be installed easily and flexibly.

This object is achieved with a holder having the features of claim 1. Advantageous embodiments of the holder are described in the sub-claims.

The holder is a connecting means between at least one elongate article and a partially rod-shaped part. The elongate articles are typically smaller in cross-section than the rod-shaped part and may be arranged flexibly relative to it. The holder is particularly well suited to Bowden cables which are to be fixed on a frame part of a bicycle. The portion of the Bowden cable held by the holder and the frame part then typically extend substantially in parallel at the fastening point.

In an embodiment of the invention, the holder has at least one partially open collar for receiving the article, of which there is at least one, the collar being closable by a closure member. The opening of the collar is sufficient to enable the article which is to be held to be inserted without or with only slight elastic deformation of the collar. When the closure member is closed, the article is secured substantially positively against escape from the collar. The holder also has at least one strap-like elastic portion, at least one of these portions having a free end of which the surface is textured over a partial region on at least one side. The holder also has a lock region capable of engaging with the textured surface of the free end of the strap-like portion.

The engagement between the free end of the strap-like portion and the lock region may be positive or non-positive as well as positive and non-positive. The strap-like elastic portions connect the collar, of which there is at least one, and the lock region in the manner of a chain. The overall length of all portions is then determined by the peripheral length of the rod-shaped part. A parallel arrangement of strap-like elastic portions is however also conceivable.

A plurality of collars and the lock region may be grouped in linked arrangements. In that case, the groups thus formed are connected to strap-like elastic portions. In each case, a strap-like portion with a free end, of which the surface is textured on one side as described, is connected to a group. The texture is usually produced by teeth. Typically, at least one of the collars forms a group with the lock region and both parts of the group are integrated with one another.

During the mounting of the holder on the partially rod-shaped part, the holder is placed round the part and the free end of the strap-like portion engages with the lock region. A plurality of positive engagement positions is preferably thus produced. The peripheral line contained by the holder is determined by the choice of one of the plurality of discrete positive engagement positions.

In a preferred embodiment, the holder has two collars which are arranged in a group with the lock region. The lock region is integrated between the two collars, and the holder has only one strap-like portion. This strap-like portion is connected to the group on one side, preferably in the vicinity of a collar, and has a free end. The side of the group which comes to rest on the partially rod-shaped part during installation is preferably adapted or adaptable to the surface shape of the part.

In a further preferred embodiment, at least a partial region of the strap-like portion with the free end has transverse ribs as teeth. The lock region has a lead through with an outlet orifice through which the free end of the strap-like portion can be guided. The transverse ribbing allows a plurality of possible discrete positive engagement positions in the lock region.

It is preferable for the lock region to have, in the vicinity of the outlet orifice of the lead through, a surface which is substantially perpendicular to the lead through. This forms a contact surface for a cutting tool.

The lead through provided in the lock region is preferably substantially perpendicular to a surface with which the lock region comes to rest on the rod-shaped part during installation. In the lock region there is preferably arranged a locking head which can engage between two ribs of the transverse ribbing of the strap-like portion. The locking head is movable in a sufficiently resilient and/or elastic manner perpendicularly to the lead through. To achieve movability, the locking head is preferably shaped on a web extending substantially parallel to the lead through.

A tongue-like taper is preferably shaped onto the free end of the strap-like portion. This taper simplifies the introduction of the free end into the lead through located in the lock region. The taper is preferably provided with transversely directed corrugations to allow better handling when it is threaded into the lock region.

In a particularly preferred embodiment, the holder is formed in one piece from plastics material. Plastics material has the advantage that it can be shaped easily and virtually as desired, that the elasticity required for the strap-like attachments may be selected by appropriate choice of material and in that a lightweight holder may thus be obtained. The risk of injury to a user can also be minimised permanently by appropriate shaping. The plastics material is shaped by a selected method of injection moulding. The closure member with which the elongate articles are secured in the open collars is then preferably articulated by means of a film hinge. The closure member preferably then has, on the side facing the open collar, a web on whose free end a locking nose is formed. In the closed state, the locking nose engages behind a holding shoulder provided on the holder.

In a further preferred embodiment, the holder has two open collars which are shaped on two opposing sides of the lock region and thus form a group, The closure member has, at its non-articulated end, a projection which covers a collar provided in the region of this end in the closed state.

The interiors of each collar are preferably provided with knob-like or rib-like mounds. The mounds are preferably distributed uniformly round the periphery. Three such mounds are preferably provided, one of these mounds optionally being shaped on the flow member so that the elongate article to be held is spatially fixed by the knob-like or rib-like mounds when the closure member is closed.

The transverse ribbing on the strap-like portion is preferably formed on the side which comes to rest on the partially rod-shaped part in the installed state. The engagement of the free end of the strap-like portion with the lock region is preferably self-holding and releasable. However, non-releasable connections are also conceivable.

The closed state of the closure member is also preferably releasable relative to the collars. Self-holding of the closure member in the closed state is preferred. In a particularly preferred embodiment, self-holding only takes place in co-operation with an elongate article inserted in at least one collar. The last-mentioned feature has the advantage that, during storage of the holder prior to installation, the closure member cannot accidentally pass into the closed state which would then have to be released manually with difficulty.

Further advantages, features and applications of the present invention will emerge from the following description of embodiments in conjunction with the drawings.
Figure 1 is a side view of holder according to a preferred embodiment of the present invention;
Figure 2 is a plan view of the holder shown in Figure 1;
Figure 3 is a detailed view of a partial region of the strap-like portion of the holder from Figure 1 and
Figure 4 is a sectional view of the holder shown in Figure 1 in the installed state.

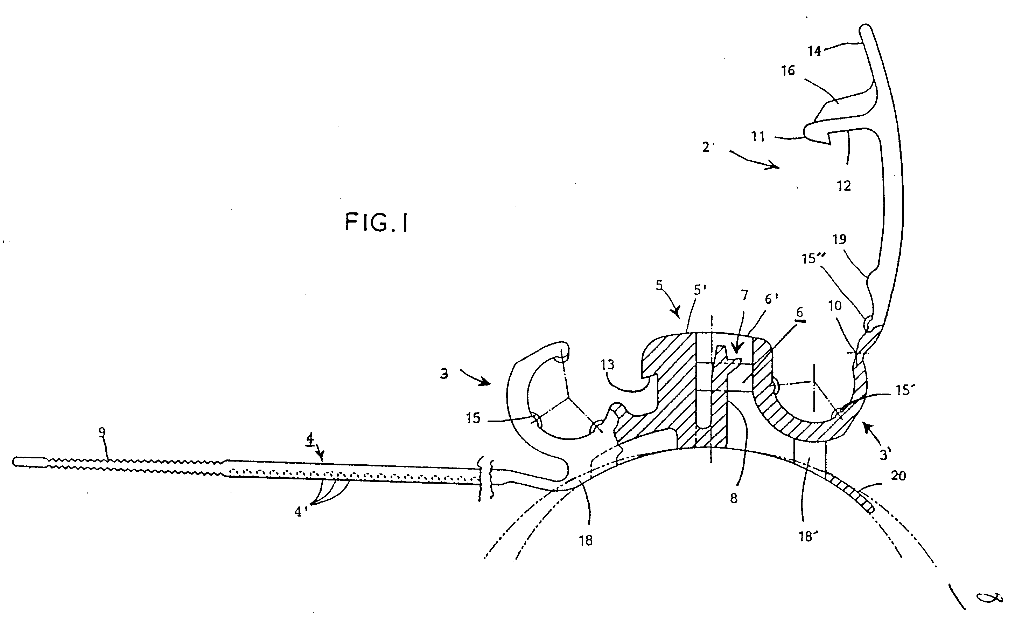

Figure 1 shows a preferred embodiment of a holder according to the present invention. The holder is in its uninstalled state. The Figure shows a group of two partially open collars 3,3' and a lock region 5 arranged between the collars. A flexible strap 4 is shaped on a first collar 3 so as to point away from the group., The strap 4 is provided, at least in a partial region with teeth (4) formed by transverse ribs which are shown in broken lines from their front faces in Figure 1. A tongue 9 is shaped at the free end of the strap 4. The tongue 9 tapers toward the free end and has upper and lower corrugations transversely to the length of the strap, making the tongue more flexible.

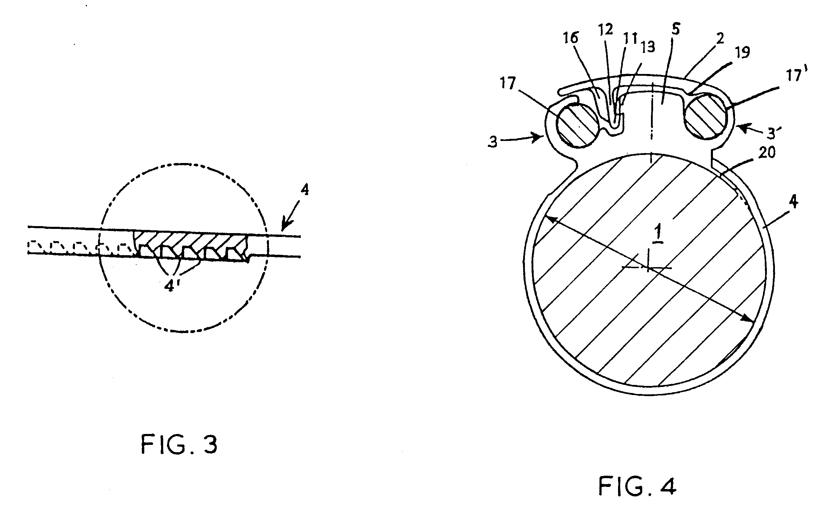

A closure member 2 is shaped via a film hinge 10 on a second collar 3' arranged on the opposite side of the lock region 5. The closure member 2 is arc-shaped. At a distance from the film hinge 10 in which the second collar 3' is also located there is shaped, on the arc 2, a bead 19 which contributes to the closing action in the region of the second collar 3'. A web 12 is shaped at a distance from the film hinge 10 corresponding to the distance of the side of the lock region 5 remote from the film hinge 10. At the free end of the web 12 there is shaped a locking nose 11 which can engage with a holding shoulder shaped on the lock region 5. The free end of the arc 2 ends in a projection 14 of which the length is determined by the distance of the first collar 3 from the film hinge. A closing rib 16 is shaped in the internal curvature in the side of the web 12 remote from the film hinge 10. The closing rib 16 serves for the self-holding of the closure member 2, as described below in conjunction with Figure 4.

The lock region 5 has a lead through 6 of which the dimensions are adapted to the cross section of the strap 4. 5 The lead through 6 has an outlet orifice 6'. The surface 5' of the lock region 5 in the vicinity of the outlet orifice 6' is substantially perpendicular to the lead through 6. The lead through 6 is tapered by a resilient locking head 7 at one position, more specifically to a smaller cross section than the external periphery of the strap 4. The locking head 7 is shaped so as to engage in a self-holding manner with the transverse ribbing of the strap 4. The resilience of the locking head 7 is achieved in that the locking head 7 is shaped at the free end of a web 8 extending substantially parallel to the lead through. In the embodiment illustrated, the lead through extends substantially perpendicularly to a surface with which the group comprising the two collars 3, 3' and the lock region 5 comes to rest on a rod-shaped part.

Short foot pieces 18, 18' by means of which the collars come to rest on a rod-shaped part are shaped onto the first collar 3 and the second collar 3' in each case. The foot portion 18' on the second collar 3' has a lead through of which the dimensions are adapted to the cross section of the strap 4 and which communicates with the lead through 6 in the lock region. A face 20 is shaped, so as to point away from the group, on the foot portion 18' so that the lead through formed in the foot portion 18' opens outwardly in the manner of a funnel and therefore simplifies introduction of the tongue 9 which in turn tapers.

It is pointed out at this juncture that the length of the tongue 9 is adapted to the total length of the lead through in the foot portion 18' and in the lock region 5. The corrugations of the tongue 9 allow simple curvature of the tongue which simplifies the introduction of the tongue in succession into the lead through in the foot portion 18' and then into the lead through 6 and projecting from the lock region 5. The lead through 6 and the lead through in the foot portion 18' are arranged at an angle corresponding to the curvature of the rod-shaped part to be surrounded. The two lead throughs are preferably arranged at an obtuse angle to one another. In contrast to the transverse ribbing of the strap 4, the transversely directed corrugations of the tongue 9 do not engage in a self-holding manner with the locking head 7 in the lock region 5.

The collars 3, 3' have rib-like mounds 15 on their interiors. The rib-like mounds are distributed as uniformly as possible round the periphery of the collars. A clear spatial fixing of an article to be fastened can be achieved by the choice of three rib-like mounds distributed round the periphery of a collar. Owing to the large angle of aperture of the second collar 3', a third rib-like mound is located on the interior of the closure member 2 remote from the second collar 3'.

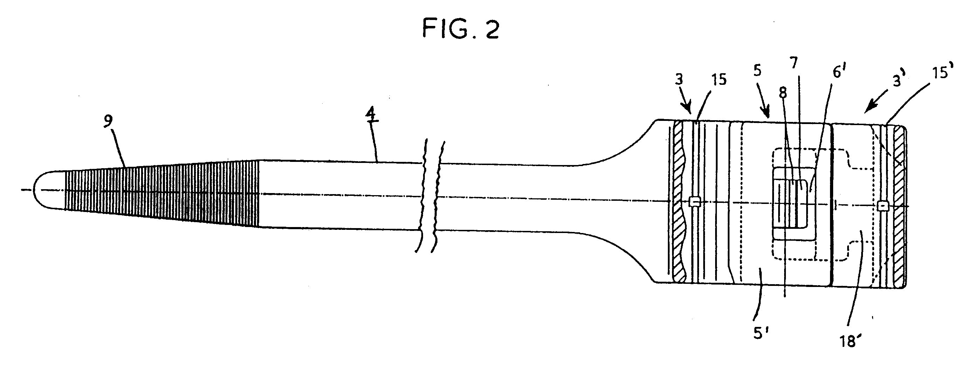

Figure 2 shows the holder illustrated in Figure 1 in a plan view. For the sake of clarity, parts of the first collar 3 and of the second collar 3' as well as the closure member 2 articulated to the second collar 3' have been omitted. Figure 2 shows a shortened view of the strap 4 with the tongue 9 shaped at the free end. The corrugations of the tongue 9 extending transversely to the longitudinal direction of the strap 4 are indicated by corresponding lines.

The corresponding rib-like mounds 15 and 15' can again be seen in the region of the collars 3, 3'. The locking head 7 shaped on the web 8 is shown in the lock region. The locking head 7 is movable relative to the passage 6 extending substantially perpendicularly to the plane of the drawing 9 (only the outlet orifice 6' as such can be seen in the Figure) as a contact face for a cutting tool. The surface 5' is located in the vicinity of the outlet orifice. The passage in the foot portion 18' of the collar 3' is illustrated in broken lines. The width of the passage 6, the outlet orifice 6' and the passage in the foot portion 18' are adapted to the width of the strap 4.

Figure 3 shows a detailed section of a partial region of the strap 4 of the embodiment shown in Figures 1 and 2 of the present invention. Figure 3 shows the transverse ribbing shaped in a partial region of the strap 4 in section. The transverse ribbing is substantially saw-tooth shaped with flanks extending substantially perpendicularly to the longitudinal direction of the strap. These flanks allow the strap 4 to engage in a self-holding manner with the locking head 7 in the lock region 5. The number of perpendicularly extending flanks of the transverse ribs corresponds to the number of possible engagement positions.

Figure 4 shows the embodiment from Figure 1 in the installed state. The strap 4 is wound round a rod-shaped element 1, and the group comprising the two collars 3 and 3' also rests on the rod-shaped element 1. The strap 4 is held in the lock region 5 by its free end. Two elongate articles 17, 17' which extend substantially parallel to the rod-shaped element 1 in the region of the holder are received in the collars 3, 3'. The rod-shaped element 1 is, for example, the frame of a bicycle, and the elongate articles 17, 17' are Bowden cables which are to be fixed on the frame part 1. The collars 3, 3' are sealed by the closure member 2 to prevent the elongate articles 17, 17' from falling out. The bead 19 in the region of the second collar 3' serves to surround the elongate article 17' over a peripheral angle which is as great as possible.

The closing rib 16 shaped on the closure member 2 has a particular role for the self-holding closing action of the closure member 2. The closing action only takes place when an elongate article 17 is inserted into the first collar 3. Only a very small gap exists between the edge of the rib 16 and the elongate article 17. The two parts could also rest on one another. This ensures that the locking nose 11 always remains in engagement with the holding shoulder 13 and the closure member 2 therefore holds itself in the closed state. This self-holding function is only possible with an elongate article 17 inserted. During closure, the elongate article 17 and/or the rib 16 have to be somewhat resilient before the locking nose passes behind the holding shoulder. This arrangement has the advantage that the closing member cannot release itself automatically and, on the other hand, that the closing action cannot take place without an elongate article 17 inserted.

In a process for the installation of the holder described in the embodiment of the invention, the strap 4 is firstly placed round a frame part 1 and the tongue 9 threaded into the lead through in the foot portion 18'. The strap 4 is then pushed forward, the tongue being deflected at the foot of the web 8 and therefore passing into the lead through 6. The tongue 9 is pushed forward through the outlet orifice 6' substantially perpendicularly to the surrounding surface 5 and can be grasped. The holder is then brought into position and the holder 4 is brought into firm contact with the frame part 1 by pulling the strap 4 from the lead through 6 of the lock region 5. The holding force is determined by the locking position achieved by pulling. The part of the strap 4 projecting from the lock region 5 is then severed. This is preferably carried out by a suitable cutting tool which is supported on the surface 5'. The Bowden cables 17, 17' are then inserted into the corresponding collars and the closure member is pivoted in until the locking nose 11 engages with the holding shoulder 13. The cut edge of the strap 4 in the region of the outlet orifice 6' is covered by the pivoted-in closure member and this additionally contributes to a low risk of damage.

The holder of the above-described embodiment is produced from plastics material by an injection moulding method. However, any other materials such as, in particular, steel are equally suitable. Although the described holder is shaped in one piece, it can also be made up from several parts which, in turn, can be also consist of different materials.

The articles 17, 17' to be held as well as the frame part 1 are shown as round in the Figures. However, a holder according to this invention is not restricted to such cross section. The strap-like portion 4 can be pre-shaped according to the cross section to be surrounded, for example by predetermined kink points.

## Claims

1. A holder for at least one elongate article (17, 17'), in particular for Bowden cables on a bicycle, which may be mounted on a substantially rod-shaped part (1), wherein the holder comprises:
at least one partially open collar (3, 3') for receiving the article end a closure member (2),
characterised in that the holder further comprises:
at least one strap-like elastic portion (4) having a free end, the surface of said portion (4) having teeth (4') on at least one side for part of its lenght;
a lock region (5) which can engage with the teeth (4') of the strap-like portion (4),
said lock region (5) being integrated into at least one collar (3,3') and having
a lead through (6) with an outlet orifice (6'), in which lead through (6) an elastically movable locking head (7) is arranged for guiding the free end of the strap-like portion (4), said lock region (5) may be closed by the closure member (2).

2. A holder according to claim 1, characterised in that the holder has two collars (3,3') and the lock region (5) is integrated between these two collars.

3. A holder according to claim 1 or claim 2 characterised in that the lock region (5) has, in the vicinity of the outlet orifice (6') of the lead through (6), a surface (5') which is substantially perpendicular to the lead through.

4. A holder according to any of claims 1 to 3, characterised in that the lead through (6) in the lock region (5) extends substantially perpendicularly to a surface with which the lock region (5) may be applied to the rod-shaped part (1).

5. A holder according to any of claims 1 to 4, characterised in that the locking head (7) is shaped on a web (8) extending substantially parallel to the lead though (6).

6. A holder according to one of the preceding claims, characterised in that a tongue-like taper (9) is shaped onto the free end of the strap-like portion (4).

7. A holder according to one of the preceding claims, characterised in that the holder is shaped in one piece from plastics material.

8. A holder according to claim 7 characterised in that the closure member (2) is articulated by a film hinge (10).

9. A holder according to claim 8, characterised in that, on the side of the closure member (2) facing the open collar (3) there is provided a web (12) having a locking nose (11) which engages behind a holding shoulder (13) provided on the holder.

10. A holder according to claim 9, characterised in that the holder has two open collars (3,3') for receiving two elongate articles which are shaped on two opposing sides of the lock region and in that the closure member (2) has, at the non-articulated end, a projection (14) which covers an open collar (3) provided in the region of his end in the closed state.

11. A holder according to one of the preceding claims, characterised in that each collar (3,3') is provided with knob-like or rib-like mounds (15) on its interior.

## Patentansprüche

1. Halter für mindestens einen einzelnen langen Artikel (17, 17'), insbesondere für Bowdenkabel an einem Fahrrad, die an einem im wesentlichen stabförmigen Teil (1) befestigt sind, wobei der Halter umfaßt:
mindestens einen teilweise offenen Kragen (3, 3') und ein Abdeckelement (2) zum Aufnehmen des Artikels,
dadurch gekennzeichnet, daß der Halter weiter aufweist:
mindestens einen streifenartigen elastischen Abschnitt (4) mit einem freien Ende, wobei die Oberfläche des Abschnittes (4) über einen Teil ihrer Länge Zähne (4') auf mindestens einer Seite besitzt;
eine Verriegelungszone (5), die mit den Zähnen (4') auf dem streifenartigen Abschnitt (4) in Eingriff kommen kann;
wobei die Verriegelungszone (5) in mindestens einen einzelnen Kragen (3, 3') integriert ist, und
einen Durchführungskanal (6) mit einer Austrittsöffnung (6'), wobei in dem Durchführungskanal (6) ein elastischer, beweglicher Verriegelungskopf (7) zum Führen des freien Endes des streifenförmigen Abschnittes (4) angeordnet ist, wobei die Verriegelungszone (5) durch das Abdeckelement (2) geschlossen werden kann.

2. Halter nach Anspruch 1, dadurch gekennzeichnet, daß der Halter zwei Kragen (3, 3') aufweist und die Verriegelungszone (5) zwischen diese beiden Kragen integriert ist.

3. Halter nach Anspruch 1 oder 2, dadurch gekennzeichnet, daß die Verriegelungszone (5) in der Nähe der Austrittsöffnung (6') des Durchführungskanals (6) eine Oberfläche (5') aufweist, die im wesentlichen senkrecht zum Durchführungskanal verläuft.

4. Halter nach irgendeinem der Ansprüche 1 bis 3, dadurch gekennzeichnet, daß der Durchführungskanal (6) in der Verriegelungszone (5) sich im wesentlichen senkrecht zu einer Oberfläche erstreckt, mit welcher die Verriegelungszone (5) auf das stabförmige Teil (1) gelegt werden kann.

5. Halter nach irgendeinem der Ansprüche 1 bis 4, dadurch gekennzeichnet, daß der Verriegelungskopf (7) auf einem Steg (8) geformt ist, der sich im wesentlichen parallel zum Durchführungskanal (6) erstreckt.

6. Halter nach einem der vorhergehenden Ansprüche, dadurch gekennzeichnet, daß eine zungenartige Verjüngung (9) auf das freie Ende des streifenartigen Abschnittes (4) gearbeitet ist.

7. Halter nach einem der vorhergehenden Ansprüche, dadurch gekennzeichnet, daß der Halter in einem einzigen Stück aus Kunststoffmaterial geformt ist.

8. Halter nach Anspruch 7, dadurch gekennzeichnet, daß das Abdeckelement (2) gelenkig durch ein Filmscharnier (10) gelagert ist.

9. Halter nach Anspruch 8, dadurch gekennzeichnet, daß an der Seite des Abdeckelementes (2), die dem offenen Kragen (3) zugekehrt ist, ein Steg (12) mit einer Verriegelungsnase (11) vorgesehen ist, die hinter einer Halteschulter (13), welche auf dem Halter vorgesehen ist, in Eingriff kommt.

10. Halter nach Anspruch 9, dadurch gekennzeichnet, daß der Halter zum Aufnehmen zweiter langer Artikel zwei offene Kragen (3, 3') aufweist, die an zwei entgegengesetzten Seiten der Verriegelungszone geformt sind, und daß das Abdeckelement (2) am nicht angelenkten Ende einen Vorsprung (14) besitzt, der den im Bereich dieses Endes vorgesehenen offenen Kragen bedeckt.

11. Halter nach einem der vorhergehenden Ansprüche, dadurch gekennzeichnet, daß jeder Kragen (3, 3') mit knopfartigen oder rippenartigen Buckeln (15) auf seiner Innenseite versehen ist.

## Revendications

1. Support pour au moins un article allongé (17, 17'), en particulier pour câbles du type Bowden sur une bicyclette, qui peut être monté sur une pièce ou partie (1) ayant pratiquement la forme d'une tige, le support comportant :
au moins un collier partiellement ouvert (3, 3') destiné à recevoir l'article et un élément de fermeture (2),
caractérisé en ce que le support comporte de plus :
au moins une partie élastique (4) analogue à une sangle ayant une extrémité libre, la surface de ladite partie (4) ayant des dents (4') sur au moins un côté sur une partie de sa longueur,
une zone (5) formant verrou qui peut venir en prise avec les dents (4') de la partie (4) analogue à une sangle,
ladite zone (5) formant verrou étant d'une pièce ou intégrée avec au moins un collier (3, 3') et ayant
un passage traversant (6) ayant un orifice de sortie (6'), passage traversant (6) dans lequel une tête de verrouillage (7) élastiquement mobile est agencée pour guider l'extrémité libre de la partie (4) analogue à une sangle, ladite zone (5) formant verrou pouvant être fermée par l'élément de fermeture (2).

2. Support selon la revendication 1, caractérisé en ce que le support comporte deux colliers (3, 3') et la zone (5) formant verrou est intégrée entre ces deux colliers.

3. Support selon la revendication 1 ou 2, caractérisé en ce que la zone (5) formant verrou comporte, au voisinage de l'orifice de sortie (6') du passage traversant (6), une surface (5') qui est pratiquement perpendiculaire au passage traversant.

4. Support selon l'une quelconque des revendications 1 à 3, caractérisé en ce que le passage traversant (6) existant dans la zone (5) formant verrou s'étend pratiquement perpendiculairement à une surface par laquelle la zone (5) formant verrou peut être appliquée sur la partie (1) en forme de tige.

5. Support selon l'une quelconque des revendications 1 à 4, caractérisé en ce que la tête de verrouillage (7) est formée sur une âme (8) s'étendant pratiquement parallèlement au passage traversant (6).

6. Support selon l'une quelconque des revendications précédentes, caractérisé en ce qu'une partie biseautée (9) analogue à une languette est formée sur l'extrémité libre de la partie (4) analogue à une sangle.

7. Support selon l'une quelconque des revendications précédentes, caractérisé en ce que le support est formé en une seule pièce à partir d'une matière plastique.

8. Support selon la revendication 7, caractérisé en ce que l'élément de fermeture (2) est articulé par une articulation sous forme de membrane ou film (10).

9. Support selon la revendication 8, caractérisé en ce que sur le côté de l'élément de fermeture (2) dirigé vers le collier ouvert (3), est agencée une âme (12) ayant un nez de verrouillage (11) qui vient en prise derrière un épaulement de retenue (13) agencé sur le support.

10. Support selon la revendication 9, caractérisé en ce que le support comporte deux colliers ouverts (3, 3') destinés à recevoir deux articles allongés, qui sont formés sur deux côtés opposés de la zone formant verrou, et en ce que l'élément de fermeture (2) comporte, au niveau de son extrémité non-articulée, une saillie (14) qui recouvre un collier ouvert (3) agencé dans la zone de son extrémité, à l'état fermé.

11. Support selon l'une quelconque des revendications précédentes, caractérisé en ce que chaque collier (3, 3') est muni de bosses (15) analogues à un mamelon ou à une nervure, sur sa partie intérieure.
